# EUROPEAN PATENT APPLICATION

(11) **EP 0 794 484 A2**
(43) Date of publication of application: **10.09.1997**
(21) Application number: 97103432.7
(22) Date of filing: 03.03.1997
(51) Int. Cl.: G06F 3/06

(54) **Partitioned hard disk drives and partitioning scheme for hard disk drives**

(30) Priority: 04.03.1996 US 12767
(71) Applicant: NEC CORPORATION, Tokyo (JP)
(72) Inventor: The designation of the inventor has not yet been filed
(74) Representative: VOSSIUS & PARTNER

(57) **Abstract**

A partitioning scheme for disk drives, and the partitioned disk drive itself, in which one or more operating systems may be installed in phantom partitions. The first time a computer housing the disk drive is booted up, the user is given a choice among those operating systems. The particular operating system that the user selects is installed into a data partition, and the phantom partitions are removed, thus preventing use of the unselected operating systems. The method is applicable to out of box audits during manufacture, and also may be used by retailers to facilitate reinstallation of software on demo computers that prospective customers have altered.

## Description

Priority is claimed from Provisional Application No. 60/012,767, filed March 4, 1996.

The present invention relates to a scheme for partitioning hard disk drives and, in particular, to a disk partitioning scheme which facilitates temporary storage of utility programs or additional operating systems on unused portions of the surfaces of the disks in the hard disk drive at the time of manufacture of a personal computer. The invention also relates to the partitioned hard disk drive itself.

The present invention addresses several problems, discussion of which will help to place the invention in context. A first problem relates to testing of computers at the time of manufacture. Generally speaking, the more quickly computers are produced on a manufacturing line, the less time each takes to manufacture, and consequently the less time there is for testing them. While there are statistical approaches to selecting appropriate computers off the line for testing, and while these statistical approaches generally have worked well, they become more difficult to implement as computers get more complicated, and in particular as the operating systems which run on those computers become more complicated.

As an example, before the Windows™ operating system came into use, computers ran primarily under DOS (CP/M™ predated DOS, but DOS became the dominant pre-Windows operating system for IBM-compatible personal computers). Testing DOS-based computers was relatively simple, because even in actual simulated use, booting a computer up in DOS did not affect what was stored on the disk surface. Thus, if a computer was shipped to a customer with a functioning operating system such as DOS, testing that computer would not affect what was stored on the hard drive.

As computers became more powerful, and as operating systems such as Windows™ came into vogue, simulation of actual operation became more complicated, and created the potential that some parameters of the operating system could be altered during testing. For example, it is not uncommon for programs to ask for registration information for a user, and to store that information on the hard drive. If this information is not removed subsequently, it remains there, and the end user (customer) can see it. Consequently, it becomes necessary to remove that information after testing.

If the information is not removed after testing, and indeed is not entered at all, when further testing is done, for example by rebooting the computer (as often can happen during testing), error messages can arise, advising of improper, incorrect, or incomplete prior installations (*e.g.*, situations in which the registration information was not provided).

With even more sophisticated operating systems, such as Windows 95™ which is shipping on many personal computers today, the operating system itself can undergo substantial modification, over and above the provision of registration information. For example, the Windows 95™ operating system, in a sense, conforms itself to the hardware on which it is operating (processor, memory, disk capacity, peripherals such as printers, CD-ROMs, modems, etc.). Indeed, with increasing need for easy installation of peripherals (in accordance, for example, with standards such as Plug 'n Play™), it is desirable for the operating system to configure new peripherals automatically. Thus, for a computer that is pulled off the manufacturing line for purposes of doing a statistical test under actual operating conditions, return of that computer to its original condition becomes very complex.

In view of the foregoing, it would be desirable to provide a scheme for facilitating testing of personal computers which does not rely specifically on the operating system that customarily is stored on the disk surface.

Another problem to which the present invention is addressed, and which is of particular interest to manufacturers of operating systems in particular, arises when there are multiple operating systems available, only one of which can and should be used by an end user. It would be useful to allow the end user to select from a variety of operating systems to run on his or her computer, but at the same time not provide the end user with fully usable copies of all of the operating systems. Looked at in the present context, an end user may wish to select from among for example, Windows NT™, Windows for Workgroups™, Windows 3.1™, or Windows 95™. Moreover, users may wish to select between an operating system configured for a workstation, as opposed to one that is configured for a server; Windows NT™ is a current example of an operating system which is configurable in either mode. In order to enable a user readily to select from all of those systems, previously it has been necessary to provide versions of all those operating systems, either in diskette or CD-ROM form, or stored somewhere on the hard drive. These prior approaches have meant that an end user would be able to use one or more of these operating systems, rather than only one of them.

From the standpoint of providing maximum flexibility to a potential customer for a computer, while at the same time retaining control over the number of licenses that are provided for given software, it would be desirable to provide a scheme which allows an end user to select a particular operating system at the time he or she first turns on the new computer, the other versions of the operating system that are not selected thereafter being unavailable to the end user.

There is a third problem, which computer retailers in particular face, relating to demonstration or display models which the retailers are trying to sell. Most often, the display models come with software pre-loaded from the manufacturer. Often the retailer will want to bundle other software with the computer, and will load that software on the computer being displayed. Potential customers will play with the demo computers in the stores, often changing numerous settings, including settings of programs which the retailer has installed. For example, a number of children's software programs enable users to enter information as an identification. When that information is entered, it is stored.

Frequently, in playing with demo computers, customers alter the settings beyond the ability of the retailer easily to restore the computer to the condition in which it first was displayed. Icons get moved around, edited, and/or deleted; screen displays and screen savers get altered; and settings for various programs get changed from their defaults, or from the way the retailer fixed the settings.

The manufacturer may provide the retailer with a diskette or CD-ROM which would enable to the retailer to take the demo computer back to 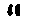 square one, 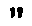 *i.e.* the condition in which the retailer received it from the manufacturer. However, by installing additional software on the computer prior to putting the computer on display, the retailer will have taken the demo computer to 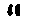 square two, 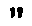 *i.e.* the condition in which the retailer is displaying the computer for customers. Customers will have altered the settings of the demo computer so that neither 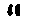 square one 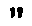 nor 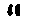 square two 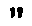 is recognizable; the computer winds up at what effectively is 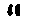 square three, 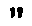 and the manufacturer is unable to get the machine back to 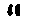 square two 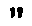 without starting at 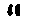 square one 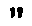 and reinstalling all of the software that had been installed originally.

Often retailers will return these computers to the manufacturers because they wind up being unsellable; prospective customers alter the setups of the demo computers beyond the ability of the retailers easily to return those computers to a condition that would be acceptable, even to a customer who is aware that he/she is buying a used computer.

It would be desirable to provide a facility in a personal computer or workstation which would enable a retailer to install software over and above the software which the manufacturer provides, and then to restore the personal computer or workstation to the condition in which the retailer put it prior to putting the machine on display.

In view of the foregoing, it is one object of the present invention to provide a partitioning scheme for disk drives which enables the provision of test utilities and other necessary software in an otherwise unused portion of the disk drive, that software being accessible thereafter either by execution of a special utility, or automatically at start up during testing. Upon completion of the test protocol, that data can remain on the otherwise unused portion of the disk surface, but ability to access that data can be removed, so that the end user will not thereafter have access to that data, but will have access to that disk space as essentially unused disk space, for storage of further files, programs, or the like.

It is another object of the present invention to provide a partitioning scheme for disk drives which enables an end user to select from one of a multiplicity of possible operating systems. All of the operating systems are stored on the disk surface, in discrete partitions, called 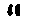 phantom partitions, 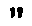 to use the language of the inventors. When the end user first turns on his or her computer, an option is provided to select one of a multiplicity of operating systems. When a particular operating system is selected, that operating system is stored at the beginning of a first partition, as is customary. Access to the remaining operating systems is prevented by removing information on accessibility of the remaining 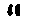 phantom partitions 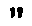 . The files stored in those former phantom partitions no longer would be accessible, but could be overwritten by a user in the normal course of operation of the personal computer.

In accordance with a further aspect of the invention, a partitioned disk drive is provided in which a first partition contains the operating system and associated files that normally would ship with the computer, and a further partition ( 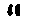 phantom partition 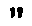 ) contains testing programs and associated test files and utilities which can be invoked on computers pulled statistically (or randomly) off the assembly line. The further partition can be effectively removed once testing is complete, thereafter being inaccessible to the end user.

In accordance with a still further aspect of the invention, a partitioned disk drive is provided in which a first partition is a bootable partition, and one or more phantom partitions are provided, each containing a complete operating system. The bootable partition also contains a menu program which enables the end user to select the operating system desired, whereupon the selected complete operating system is transferred from the phantom partition in which it resides to the first partition (in accordance with a preferred embodiment). When the first partition is overwritten with the operating system, the menu program and other former contents of the first partition are destroyed. Further, the phantom partitions likewise are destroyed, so that the remaining operating systems no longer are accessible, retrievable, or usable.

In accordance with a still further aspect of the invention, a disk partitioning scheme is provided whereby a retailer can install software on a personal computer or workstation; memorize the setup of that computer/workstation; store that setup in a phantom partition on the hard drive of the computer/workstation; and, in the event of alteration of the setup, return the computer/workstation to the memorized setup.

It is important to note that the various objects of the invention just described are by no means mutually exclusive. The phantom partition techniques which the inventors have developed are capable of accomplishing one, more than one, or all of the described objects of the invention, as desired.

### Brief Description of the Drawings

Preferred embodiments of the present invention now will be described in detail with reference to the accompanying drawings, in which:
Fig. 1 shows a conventional hard disk topology;
Fig. 2 shows an alternate conventional hard disk topology;
Fig. 3A shows a hard disk topology in which an operating system is loaded into a contiguous portion of the unused disk space, and Fig. 3B shows a hard disk topology in which an operating system is loaded into unused disk space using a so-called 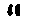 sparse matrix 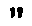 algorithm;
Fig. 4 shows a scheme in accordance with one aspect of the invention, in which a phantom partition is created, and in which the partition table points to the beginning of the standard bootable partition;
Figs. 5A-5C show the creation of a plurality of phantom partitions on a disk surface in accordance with a second aspect of the invention, Figs. 5B-5C showing variants of Fig. 5A with the bootable partition at different respective locations on the disk surface than in Fig. 5A;
Figs. 6A-6C show examples of how a selected operating system is loaded from a phantom partition such as those shown in Figs. 5A-5C;
Fig. 7 is a flowchart showing application of the invention in a context in which a user selects one of a plurality of operating systems stored on the disk surface;
Fig. 8 is a flowchart showing application of the invention in a manufacturing context;
Fig. 9 shows the use of the invention in a retailing context, in accordance with a further aspect of the invention;
Fig. 10 is a flowchart showing application of the invention in a retailing context; and
Fig. 11 is an example of the use of the invention in a manufacturing context.

### Detailed Description of the Preferred Embodiments

As applicable to the delivery of multiple operating systems to a user, in accordance with the invention, each operating system stored on the hard disk for the computer believes that it is the only operating system installed on the drive. Thus, if that particular operating system is the one selected, it will operate correctly.

Dual-boot schemes are known, in which two operating systems (*e.g.*, Windows™ and OS/2™, Windows 95™, and Windows NT™) are stored on a disk surface, and a user is able to select one or the other of these operating systems. In those set ups, two operating systems co-exist on the disk surface, and are never removed. Every time the user boots up the computer, the option exists of entering either operating system.

In contrast, in accordance with one aspect of the invention, once an operating system is selected -- effectively, at the beginning of the useful life of the computer, the first time the end user turns the computer on -- it becomes the only operating system on that disk surface, the other operating systems being removed or disabled.

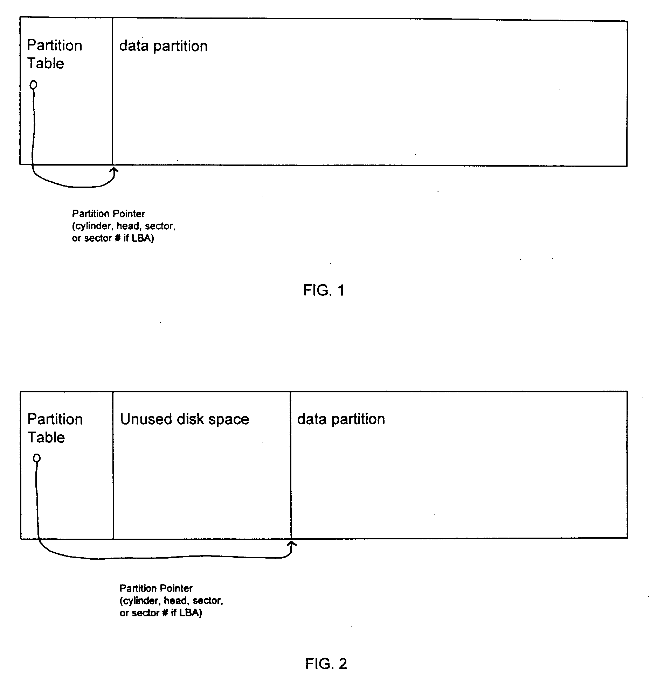

Looking at Fig. 1, each hard disk drive typically is partitioned into a single partition that spans the usable area of the drive. The drive can be thought of as having two distinct sections: 1) the partition table, which defines the areas of partitioning of the drive; and 2) the partition itself. Normally, each partition has a drive letter associated with it. Thus, in situations in which a user wishes to have more than one partition on his or her disk drive, each partition will be given a different drive letter. For example, if a hard drive were divided into two partitions, one partition might be labeled C:, and the other might be labeled D:.

By way of background, a hard disk drive (or a hard drive) has one or more disks, each having two surfaces, usually with a transducing head associated with each disk surface. Each disk surface has a plurality of tracks on which data can be recorded, and from which data can be read. The disks in a disk drive are stacked in a spaced-apart fashion, one above the other. The stack looks like a solid cylinder. Indeed, because the tracks on the respective disks are stacked correspondingly, each concentric area is referred to as a cylinder. As disk drives have grown in capacity, more and more tracks (and hence more and more cylinders) have been provided.

Disk surfaces are divided not only into tracks, but also into sectors. Each sector typically is 512 bytes long, though sectors of variable size are possible. By identifying a physical cylinder number, a physical sector number, and a physical head, it is possible uniquely to identify head position on a disk surface in a physical sense. So-called 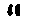 virtual addressing 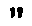 also exists, and is used in techniques such as large block addressing (LBA). Using LBA, sectors on all of the disks in a disk drive together are thought of as being consecutive, from #0 to the number of total sectors on the drive. Virtual addressing also helps to account for good sectors on disks, as portions of disk surfaces degrade over time; 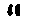 bad 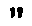 sectors, which would have a physical address, may be skipped by not assigning them a virtual address.

The partition table, depicted schematically in Fig. 1, contains the pointer to the start of the partition on the hard disk surface. Normally, the partition will start directly after the partition table. However, there is no requirement that this be true. As shown in Fig. 2, for example, an equally valid alternative hard disk topology is shown in which there is unused disk space between the data partition and the partition table. When a drive is partitioned in this way, the section in Fig. 2 that is marked 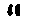 unused disk space 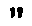 normally is not accessible by the operating system. Configuration of a partition table to create partitions, and to identify location of partitions, is known in the art, and is well within the abilities of the ordinarily skilled artisan. Consequently, detail of creation and configuration of partition tables is not necessary here.

The inventors have tested a variety of operating systems in a drive configured as shown in Fig. 2, and all of these systems (including MS-DOS 6.0, MS-DOS 6.22, Windows 95™, Windows for Workgroups™ 3.11, and Windows NT™ 4.0) have operated properly.

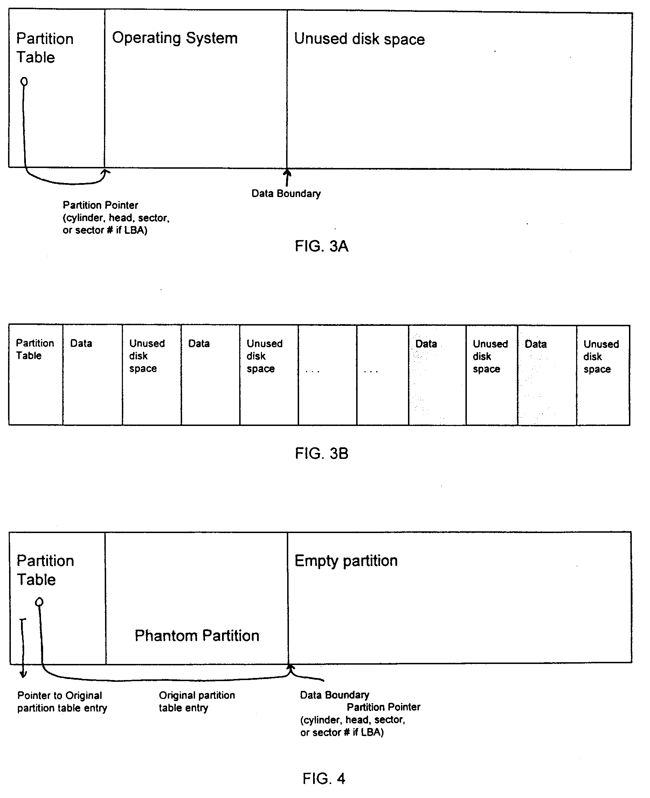

The inventors use the phrase 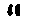 phantom partitions 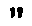 to describe partitions that appear to the operating system to occupy an entire valid partition area, but which physically do not occupy that area. Phantom partitions are created by formatting the hard drive to contain one large partition, as shown for example in Fig. 1. An operating system then is installed into this partition, as shown in Fig. 3A. The operating system that is installed believes that it has the entire disk partition into which to expand, and subsequently the operating system sets up its file system, accordingly. FAT16, FAT32, HPFS, and NTFS, among others, are currently supported file systems. However, typically, when an operating system is loaded into an empty partition, all of the data and programs are located physically towards the beginning of the partition. Thus, it is possible to identify where unused disk space within the partition starts. Identification of this starting point can be identified even more readily using a disk defragmentation procedure, as is known.

In Fig. 3A, the data boundary is the location on the drive, by cylinder number, sector number on the cylinder, and head position, in which valid data for the operating system, such as, for example, the windows NT™ 4.0 operating system, ends. In accordance with the invention, this value of starting position is taken, and rounded up to the next cylinder boundary, with a cylinder buffer being added. The value then is stored in an unused section of the first cylinder, in which the partition table is stored. The partition table pointer then is changed to reflect the new starting point of the disk, as shown in Fig. 4. Thus, Fig. 4 shows an alternative positioning scheme in which the standard partition is shown in a valid position, but different from normal. The space marked 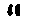 Phantom Partition 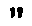 cannot be used by standard partitioning schemes, and so is lost to the customer.

In a variant shown in Fig. 3B, the invention is able to account for operating systems which do not use file allocation tables. For example, Microsoft has altered its NTFS (standing for NT File System) operating system to cause data to be interspersed on a disk surface, using a so-called 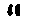 sparse matrix 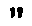 algorithm. This is a different approach from known FAT operating systems. For example, it is known in the art that disk drives operate more quickly when data files are not interspersed in bits and pieces throughout a disk drive. The less a head has to travel to read data from or write data to the same file, the more quickly the drive operates. Thus, 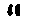 defragmentation 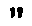 of disk drives has become well known. In known defragmentation techniques, the drive starts in a sort of 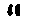 sparse matrix 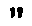 configuration, and the data storage is altered to store data files in contiguous sectors.

With the "sparse matrix" algorithm, data is interspersed throughout the disk surface, as shown for example in Fig. 3B. The NTFS operating system accounts for this interspersion without the need for a file allocation table.

Turning back to Fig. 4, by installing software in the 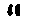 empty partition 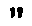 as shown in that Figure, it is possible to create another phantom partition. As many phantom partitions can be created as there is physical space on the drive. To enable storage of more data on the disk, and to preserve existing license agreements, operating systems stored in phantom partitions may be encoded with an encryption scheme. The hidden partition table pointers to the phantom partitions also may be coded. These steps may be taken to preserve the rights of an operating system manufacturer against piracy, and against an end user obtaining a valid copy of more than one operating system per disk drive.

As an example to describe the context of the invention, it may be imagined that an end user may desire to run either Microsoft Windows 95™ or Microsoft Windows NT™. To avoid giving the user copies of both operating systems, the user may be given the option selecting one or the other operating system, even though both ship on the drive when the computer is sold.

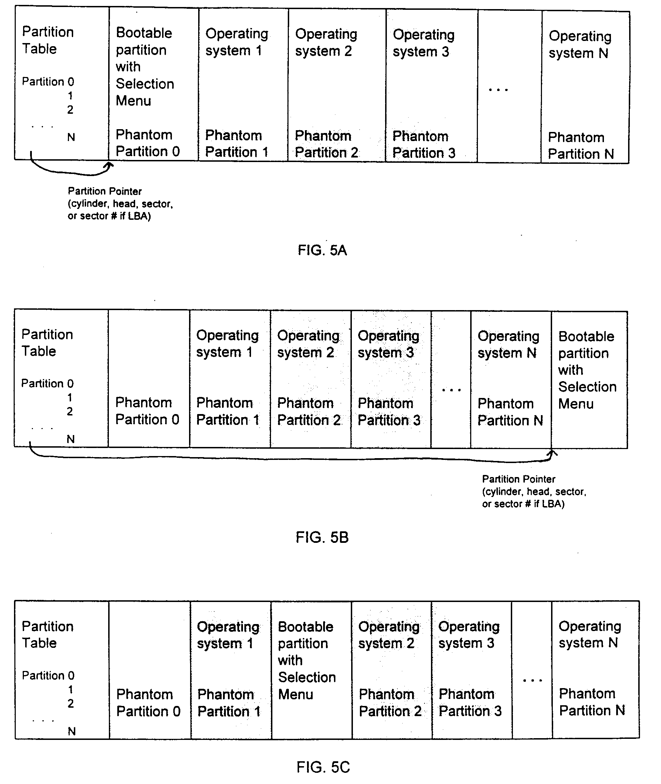

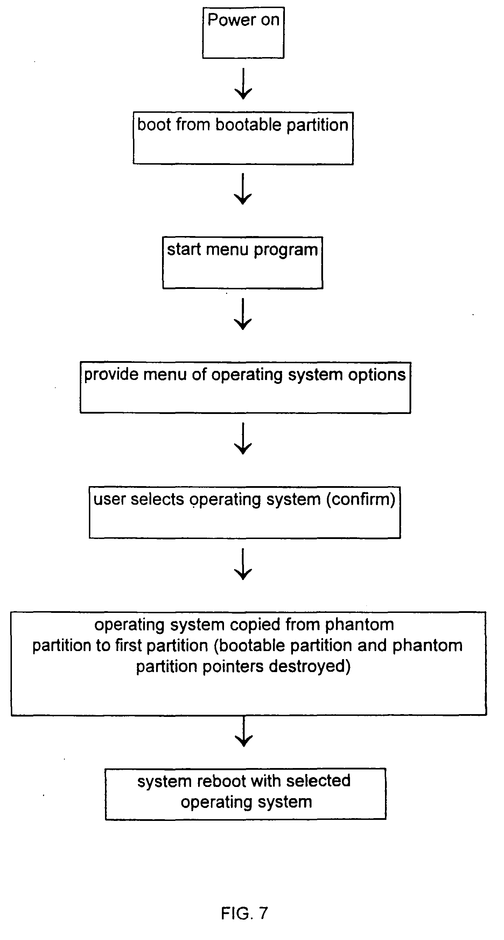

Fig. 5A shows the physical layout of several phantom partitions on a hard drive, each phantom partition containing a different operating system. The partition table can contain as many partition numbers as there are phantom partitions. As an example, an unused disk portion may contain a bootable MS-DOS partition with a selection menu. In operation, the phantom partitions work as follows (with reference to the flow chart in Fig. 7). First, the user boots his or her computer, and the active partition (in this case the bootable MS-DOS partition) is used to load and execute the operating system on that partition. The computer boots into a menu program which offers the user a selection of only one operating system from among the total number of operating systems loaded on the hard drive. The user selects one of those operating systems. The menu program then provides a double check to confirm the user's selection. This gives the user a chance to select a different operating system if he or she desires, or to confirm his or her original choice. The confirmation is important in this case, because once a selection is confirmed, it is irreversible.

Once the user has confirmed a selection, the specified operating system then is copied to the first partition on the hard disk (nearest to the partition table in this embodiment). After the completion of the copy operation, the menu program reboots the system, and upon rebooting, the computer starts the selected operating system. Since the selected operating system is stored in the first partition, the original bootable MS-DOS partition containing the menu program would be destroyed by the user selected operating system when it was copied to the first partition. All record of the phantom partition boundaries also would be destroyed. A further piracy protection step is that the 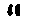 head 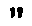 of each phantom partition on the disk is destroyed prior to reboot, thus rendering reconstruction impossible -- even for the inventors.

The data representing the other operating systems still would be physically on the disk, but would not be accessible by a user by normal means. Rather, in order to attempt to resurrect the other stored operating systems, a user would be required to locate all of the several thousand clusters on which the operating system might be stored, and to reassemble them into the correct sequence in order to regain a useful operating system. The level of detailed work that would be required to obtain a useful copy of a second operating system would be very great, and very prone to error. Compression of the operating systems in the phantom partitions would ensure further that the task of recreating a second operating system would be futile, as it would require not only correct resequencing of the clusters, but also decryption of the data contained in the clusters.

An alternative configuration is shown in Fig. 5B, in which the bootable partition is placed at the end of the various phantom partitions containing the different operating systems. The result of a user selection of an operating system in the Fig. 5B embodiment differs from that of Fig. 5A in that, since the bootable partition is no longer in the first partition, it would not be destroyed just because the selected operating system is stored in the first partition. The result of this difference is that, during installation of the selected operating system, the time window during which a fault can occur is reduced from 15 seconds to 4-10 milliseconds. Another consequence is that it would be impossible, not just very difficult, to resurrect a useful copy of a second operating system from the disk surface.

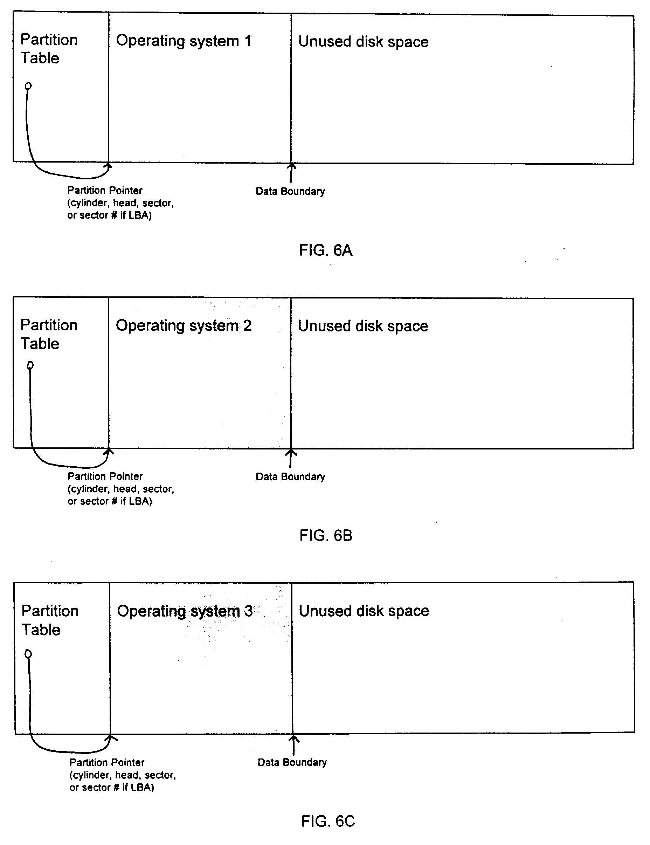

As shown in Figs. 6A, 6B, and 6C, where multiple operating systems are stored as shown in Figs. 5A-5C, each of these operating systems upon selection would be stored as shown in these respective figures. Effectively, each operating system would behave as if it were the only operating system stored on the drive, and so each operating system gets the entire disk space in which to operate. Each disk/operating system layout in Figs. 6A-60 is 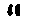 phantomed 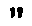 (i.e. the act of creating a phantom partition) and stored in any of the phantom partition configurations shown in Figs. 5A-5C. In Figs. 5A-5C and 6A-6C, operating system 1 could be Windows 95™, operating system 2 could be Windows NT™ for a server, and operating system 3 could be Windows NT™ for a workstation.

According to the invention, the bootable partition can contain minimal software necessary for the menu program to be activated, and the selected operating system to be copied to the first partition. In any event, part of the overall execution of the menu program involves the destruction of all relics of the menuing program, the phantom partition table pointers, and the 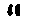 heads 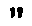 of all phantom partitions.

It should be noted that the invention is not limited to operating systems running on an Intel or Intel-compatible platform. It is within the contemplation of the invention to permit storage of different types of operating systems, should that be desired, in different phantom partitions. What is required is that the initial bootable partition be something accessible by the microprocessor(s) involved. It would not be out of the question for the invention to be applicable to cross platform operating systems or emulations, including operating systems or emulations for computers based on the PowerPC™ chip, the Motorola family of microprocessors, RISC processors, and/or the Intel family of microprocessors and those processors compatible with one or more of the above.

As applied in the manufacturing area, the invention would work as follows. By way of background, it is desirable for companies who manufacture personal computers to improve the thoroughness of their testing of assembled computers, while at the same time taking less time for that testing.

It is known to subject assembled computers to an aging test through the use of a bootable test diskette. All systems passing such a test would be sent on for packaging and shipment to an eventual customer. A so-called out-of-box audit (OBA) may be performed on a subset of assembled units, for example, between 1 in 10 and 1 in 30. If any problems are discovered through the OBA process, the ratio of tested units may be increased or decreased to determine the scope or severity of the problem.

As described earlier, it was not always risky to boot a computer from the operating system loaded directly on the hard drive, in the sense that the booting procedure did not alter files stored on the drive. However, with more recent operating systems such as Windows 95™, the first time the operating system is booted, it can undergo substantial self-modification during a first boot cycle. For example, should the first system boot not be completed (in Windows 95™, this first boot would be a process that involves recording the owner's name, a Microsoft serial number, and other pertinent information) the next successive reboot presents the user with a warning message describing a 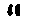 failed 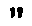 prior boot. In the event of a partial booting sequence, up to the point where information such as that just described is requested, it is possible to delete the critical files that indicate that a boot occurred. In general, however, it is desirable to try to avoid such a situation wherever practical.

However, an OBA is a situation in which booting of the hard drive cannot be avoided. During an OBA, the sample system will be completely unpacked, set up, and tested extensively. In an effort to verify the fitness of the newly built system, every aspect of the machine will be exercised, including the viability of the loaded operating system (loaded by a process known in the art as a HotLoad). An OBA technician will completely install an operating system with a valid user name, serial number, etc. After the OBA, it is necessary to restore the HotLoad to original factory condition, using a so-called CD-restore. However, this restoration process adds to the time required for an OBA, and thus limits the number of systems that can undergo such an audit. Either fewer systems have to be tested on a statistical basis, or fewer systems can be manufactured. Either situation is unacceptable, as might be imagined.

Out of a desire to enhance the testing procedure over the current OBA process, consideration has been given to increasing the sampling rate. One such plan under development at the assignee of the present application is an on-line continuous sample plan, or CSP. Implementation of CSP requires that at least one in four systems be actually be booted up from the hard drive, and quickly tested. CSP is intended to occur after aging, and before a system is packaged.

On the assumption that one computer will be produced every 90 seconds, every fourth system under the CSP scheme would be pulled aside, hooked up to power, keyboard, mouse, and speakers, and booted up. After a cursory check of the overall hardware and software system, the system would be put back into line for packaging. Ideally, such a check should take no more than five minutes. If it takes longer, the rest of the assembly line would be impeded.

As a fallout of the CSP system, should a problem be identified during a CSP check, the plan would require that all systems undergo such a check. This would be done to determine whether the problem is an isolated instance, or symptomatic of a procedural defect in the assembly process. Based on the results of this 100% testing, the CSP scheme would either have the assembly line shut down to investigate the problem further, or would drop back to the one in four (25%) testing level. Whatever the outcome, any system that undergoes such a boot up test requires the HotLoad, or the stored operating system, to be restored prior to packaging.

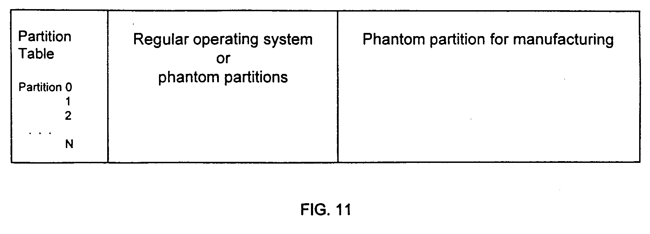

As can be appreciated, the present invention creates a phantom partition as shown in Fig. 11. The HotLoaded operating system is stored in a first partition, and the phantom partition stores various types of software, including testing utilities and the like. Once the testing software is loaded, the partition table entry pointing to the phantom partition on the master boot record can be removed, and stored in the empty space, shown in Fig. 11, on the first track of one of the disks. When the original partition table entry, describing the 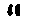 real 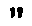 partition, is restored to the master boot record, there is no further indication that the phantom partition ever existed. When a customer then gets the system, the sectors used by the phantom partition eventually would be used up in normal operation, and all traces of the phantom partition would vanish. In the meantime, the testing utilities and the like still would show up on the disk surface, within what formerly was the phantom partition, but they would not be accessible by the user.

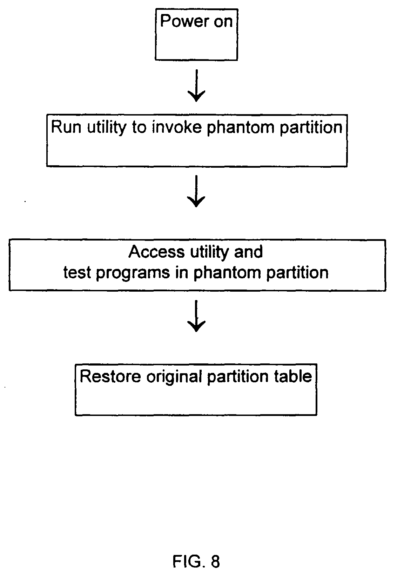

On systems designated to undergo CSP, as described in the flow chart of Fig. 8, an individual on the manufacturing line can simply run a special utility (for example, via a diskette) and restore the phantom partition entry to the partition table. Invoking substitute partition tables is known in the art, and so need not be described in greater detail here. By restoring the phantom partition entry to the partition table, the hard drive then would appear to have a single phantom partition which, when booted, runs specialized manufacturing test software. After the CSP test is completed, the original partition table entry can be restored, and the system can continue on to be packaged for eventual shipment to an end user. Since the original partition, loaded up with the software (operating system, word processing, games, or other software) intended to be sold with the system, was never booted, there is no need to restore the contents of that original partition.

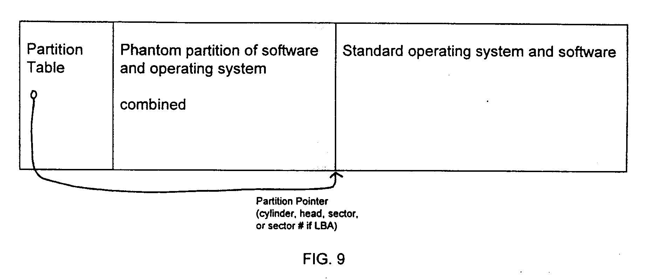

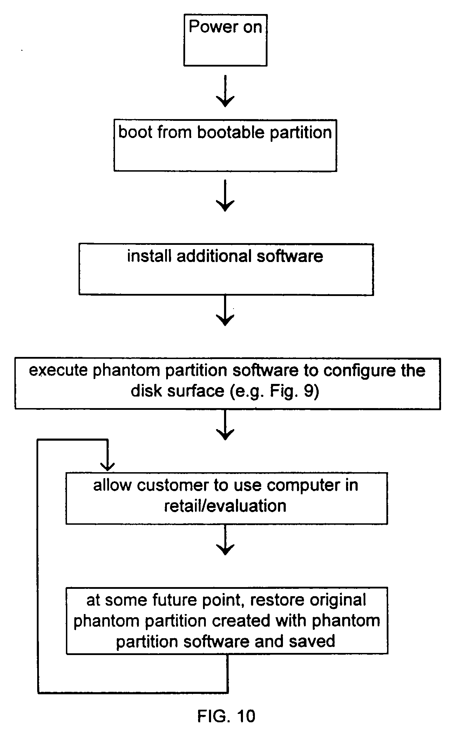

As was mentioned earlier, retailers also encounter difficulties resulting from customer alteration of demo computers. Fig. 9 shows an embodiment of the disk partitioning scheme of the invention in which a retailer can install software in a phantom partition on the drive. The phantom partition contains the operating system and the desired software. The space shown schematically to the right contains the operating system and software that the customer would use on the demo computer. It should be noted that the retailer could receive the computer from the manufacturer with phantom partitions installed as shown in Fig. 5A-5C, or Figs. 6A-6C, so that the retailer can select the operating system to be loaded on the computer in advance of installing whatever other software the retailer wants to bundle with the computer.

Looking at Fig. 10, which shows a flow chart of operation of the invention in a retailing context, to install a piece of software, the retailer first would boot up the computer from a bootable partition. At this point, either an operating system would be selected (if the manufacturer had implemented this aspect of the invention), or the operating system that had been pre-installed on the system (*e.g.* through a HotLoad at the manufacturer) would be invoked. Either way, once the operating system is running, the retailer then would install the desired software to the hard drive as normal.

Next, the retailer would defragment the disk, and then execute a phantom partition creation routine, which would create the disk structure shown in Fig. 9.

While particular embodiments of the present invention have been described, various modifications within the scope and spirit of the invention can be readily appreciated. Thus, this invention is not intended to be limited by the embodiments described herein.

## Claims

1. A method of partitioning a hard disk drive in a computer, said method comprising:
providing at least a first, phantom partition and a second, user partition on a surface of at least one disk in said hard disk drive;
storing a computer operating system in said phantom partition; and
responsive to a user request during initial bootup of said computer, installing said computer operating system in said user partition and removing said phantom partition.

2. A method according to claim 1, wherein said providing step further comprises providing a plurality of phantom partitions on said surface, said method further comprising providing a user, during said initial bootup, with a menu listing a plurality of computer operating systems from which the user can select, said installing step comprising installing the user-selected computer operating system and removing said phantom partitions.

3. A method according to claim 1, further comprising:
providing a further phantom partition on said surface, and storing at least one user software program in said further phantom partition;
responsive to a user request, installing said user software program in said user partition.

4. A method according to claim 3, further comprising the step of retaining said further phantom partition with said at least one user software program stored therein, for subsequent reinstallation of said at least one user software program in said user partition.

5. A method according to claim 3, wherein said installing step comprises installing a plurality of user software programs in said further phantom partition.

6. A method according to claim 5, further comprising the step of retaining said further phantom partition with said plurality of user software programs stored therein, for subsequent reinstallation of said programs in said user partition.

7. A method of partitioning a hard disk drive in a computer, said method comprising:
providing at least a first, phantom partition and a second, user partition on a surface of at least one disk in said hard disk drive;
storing at least one user software program in said phantom partition; and
responsive to a user request, installing said at least one user software program in said user partition.

8. A method as claimed in claim 7, wherein said storing step comprises storing a plurality of user software programs in said phantom partition, said method further comprising providing a user with a menu containing a list of said user software programs, and offering the user an option to install one of said user software programs, said installing step occurring in response to said offering step.

9. A method as claimed in claim 7, wherein said offering step comprises the step of offering the user an option to install more than one of said user software programs.

10. A method of partitioning a hard disk drive in a computer, said method comprising:
providing at least a first, phantom partition and a second, user partition on a surface of at least one disk in said hard disk drive;
storing a computer operating system in said phantom partition; and
responsive to a request during manufacture of said computer, installing said computer operating system in said user partition.

11. A method as claimed in claim 10, further comprising the step of retaining said phantom partition with said computer operating system stored therein, for subsequent reinstallation of said computer operating system in said user partition.

12. A method as claimed in claim 10, wherein said providing step comprises the step of providing a plurality of phantom partitions and a user partition on at least one surface of at least one disk in said hard disk drive, and storing a different respective computer operating system in each of said phantom partitions, said installing step comprising, in response to said request, installing a selected one of said computer operating systems in said user partition.

13. A partitioned hard disk drive, comprising:
at least one disk divided into at least two partitions, one of said at least two partitions being a phantom partition into which a computer operating system is installed, a second of said at least two partitions being a user partition for storing data,
said phantom partition being configured such that, once said computer operating system is installed from said phantom partition to said user partition, said phantom partition is removed.

14. A disk drive as claimed in claim 13, wherein said at least one disk is divided into a plurality of partitions, at least one of said partitions being a user partition for storing data, and the remaining partitions being phantom partitions, each having a different respective computer operating system installed therein;
said phantom partitions being configured such that, in response to a user selection, one of said computer operating systems is installed in said user partition, and said phantom partitions are removed.

15. A disk drive as claimed in claim 13, wherein said at least one disk further includes a further phantom partition having at least one user software program stored therein, said further phantom partition being configured such that, in response to a user selection, said user software program is installed in said user partition, said further phantom partition being retained for subsequent reinstallation of said user software program.

16. A disk drive as claimed in claim 15, wherein said further phantom partition has a plurality of user software programs stored therein, one of said user software programs being installed in said user partition in response to said user selection.
